Europäisches Patentamt

(19) European Patent Office

Office européen des brevets

(11) Numéro de publication : **0 081 108 B1**

(12) **FASCICULE DE BREVET EUROPÉEN**

(45) Date de publication du fascicule du brevet :
29.07.87

(51) Int. Cl.⁴ : **F 16 G 11/00, B 63 B 21/54**

(21) Numéro de dépôt : 82110606.9

(22) Date de dépôt : 17.11.82

(54) **Dispositif permettant le passage à distance d'un lien dans ou autour d'un organe d'accrochage.**

(30) Priorité : 27.11.81 CH 7584/81
10.05.82 CH 2903/82

(43) Date de publication de la demande :
15.06.83 Bulletin 83/24

(45) Mention de la délivrance du brevet :
29.07.87 Bulletin 87/31

(84) Etats contractants désignés :
CH FR GB IT LI SE

(56) Documents cités :
CH-A-  587 144
US-A- 2 347 718
US-A- 2 730 985
US-A- 3 813 122

(73) Titulaire : Pecorini, Claude
2/11 Rue des Bugnons
CH-1217 Meyrin, Genève (CH)

(72) Inventeur : Pecorini, Claude
2/11 Rue des Bugnons
CH-1217 Meyrin, Genève (CH)

(74) Mandataire : Micheli, Michel-Pierre et al
MICHELI & CIE 118, Rue du Rhône Case Postale 47
CH-1211 Genève 6 (CH)

Jouve, 18, rue St-Denis, 75001 Paris, France

## Description

La présente invention a pour objet un dispositif permettant de passer en double une corde ou lien autour d'un objet tel qu'une branche d'arbre, une barre fixe, une boucle d'amarrage, un anneau de bouée ou de corps mort, barreau d'échelle, etc., qui n'est pas accessible pour l'usager.

Il existe actuellement un tel dispositif, plus particulièrement destiné à la navigation, qui est décrit dans US-A-2 347 718 par exemple et qui comporte un support muni à une de ses extrémités d'une coulisse dans laquelle coulisse un coulisseau dont la longueur est supérieure au double de celle de la coulisse. Dans cette réalisation le coulisseau comporte une entaille s'ouvrant en direction de la coulisse ainsi que des moyens de fixation d'un lien.

La présente invention constitue une variante perfectionnée du dispositif décrit dans le document précité et est en outre destinée à d'autres usages que ceux relatifs au nautisme.

Ce dispositif selon l'invention se distingue par les caractéristiques énumérées aux revendications 1 à 9.

Le dessin annexé illustre schématiquement et à titre d'exemple une forme d'exécution du dispositif selon l'invention.

La figure 1 en est une vue partielle de côté.

La figure 2 en est une vue partielle de l'autre côté.

La figure 3 en est une vue de dessus, le support et la coulisse étant enlevés.

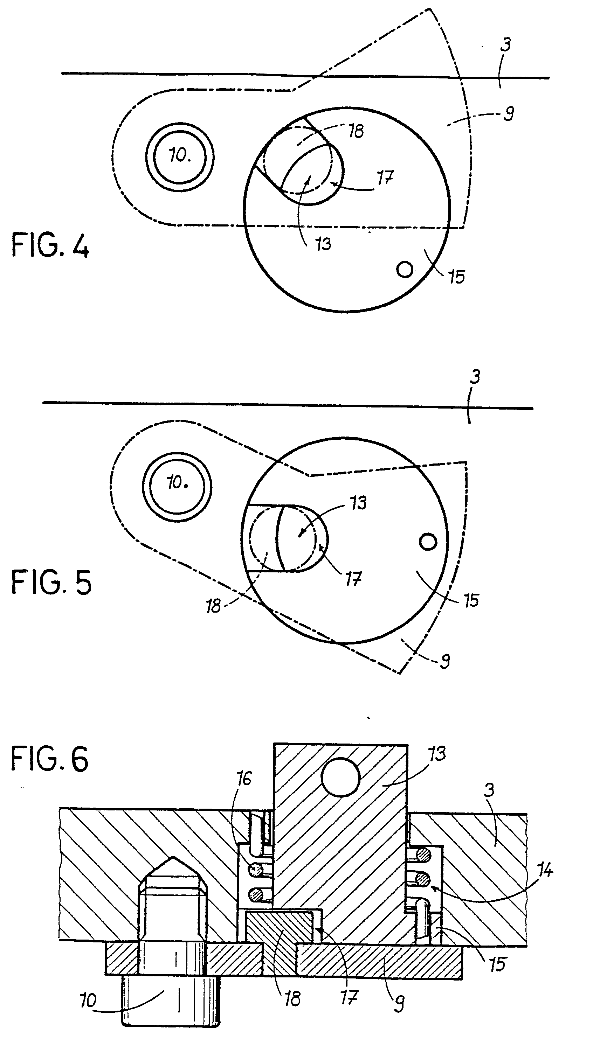

Les figures 4 et 5 sont des schémas de détail illustrant une partie d'un mécanisme de verrouillage en position active respectivement inactive.

La figure 6 est une coupe illustrant le mécanisme de verrouillage.

Les figures 7 et 8 illustrent une seconde forme d'exécution du mécanisme de verrouillage.

La figure 9 est une coupe suivant la ligne IX-IX de la figure 8.

Le dispositif illustré permettant le passage à distance d'un lien dans ou autour d'un organe d'accrochage comporte un support 1 pouvant présenter la forme d'un manche par exemple, dont l'extrémité est munie d'une coulisse 2 ou glissière.

Le dispositif comporte encore un coulisseau 3 dont une tranche 4 comporte une formation correspondant à la glissière 2 et coopérant avec celle-ci. Ce coulisseau 3 peut ainsi glisser dans la coulisse 2 et occuper par rapport au support différentes positions. La formation portée par la tranche 4 du coulisseau 3 présente à ses extrémités des butées limitant les déplacements du coulisseau 3 par rapport à la coulisse 2.

Le coulisseau comporte à l'une de ses extrémités au moins des moyens de fixation d'un lien constitués dans l'exemple illustré par un ou deux perçages 5 respectivement 6, 7. L'utilisation de deux perçages 6, 7 pour la fixation d'un lien au coulisseau permet d'effectuer cette fixation sans faire de nœuds, par simple passage du lien dans le premier perçage 7, autour de la tranche du coulisseau puis passage de ce lien dans le second perçage 6. On obtient ainsi un autocoincement du lien par lui-même sur le coulisseau 3.

Le coulisseau 3 comporte encore, débouchant sur sa tranche dirigée vers le support 1, une entaille 8 dont l'axe xx forme un angle α avec l'axe yy du coulisseau 3. Cet angle est inférieur à 90° de sorte que cette entaille est, en position de service illustrée du dispositif, inclinée en direction du support 1, ce qui facilite le dégagement d'un organe d'accrochage.

La longueur du coulisseau 3 est supérieure à 2 fois celle de la coulisse 2 d'une valeur au moins égale à la largeur de l'entaille 8 pour que celle-ci puisse être située soit d'un côté, soit de l'autre de ladite coulisse.

Dans une variante, il est évident que la glissière 2 et la tranche 4 correspondant du coulisseau pourraient être incurvées, ce qui dans certains cas permet une meilleure maniabilité du dispositif. Par exemple la coulisse peut être concave et le coulisseau convexe.

Le dispositif illustré comporte encore un mécanisme de verrouillage du coulisseau sur la coulisse dans sa position initiale de service.

Ce mécanisme de verrouillage comporte un verrou 9 pivoté sur le coulisseau 3 autour d'un axe 10 et comportant un bec 11 destiné à coopérer avec un logement pratiqué dans le support 1.

Sur la face opposée du coulisseau 3 se trouve un levier de commande 12 articulé en X sur un pivot 13 tourillonné dans un logement 14 du coulisseau. Ce pivot 13 comporte une base 15 de plus grand diamètre et est soumis à l'action d'un ressort 16 agissant tant angulairement qu'axialement sur le pivot 13. La base 15 du pivot 13 comporte un évidement 17 coopérant avec un téton 18 solidaire du verrou 9.

Pour verrouiller de façon permanente le coulisseau 3 sur le support 1, l'usager fait pivoter le levier de commande 12 autour de son axe X de façon que son ergot 19 vient se placer dans une entaille 20 du coulisseau interdisant tout pivotement du levier 12 autour de l'axe du pivot 13 et donc tout déverrouillage du coulisseau par rapport au support. Lors de ce pivotement, le ressort 16 est comprimé axialement puis se détend de nouveau. Le levier 12 est donc maintenu sous l'action de ce ressort 16 dans ses deux positions de service.

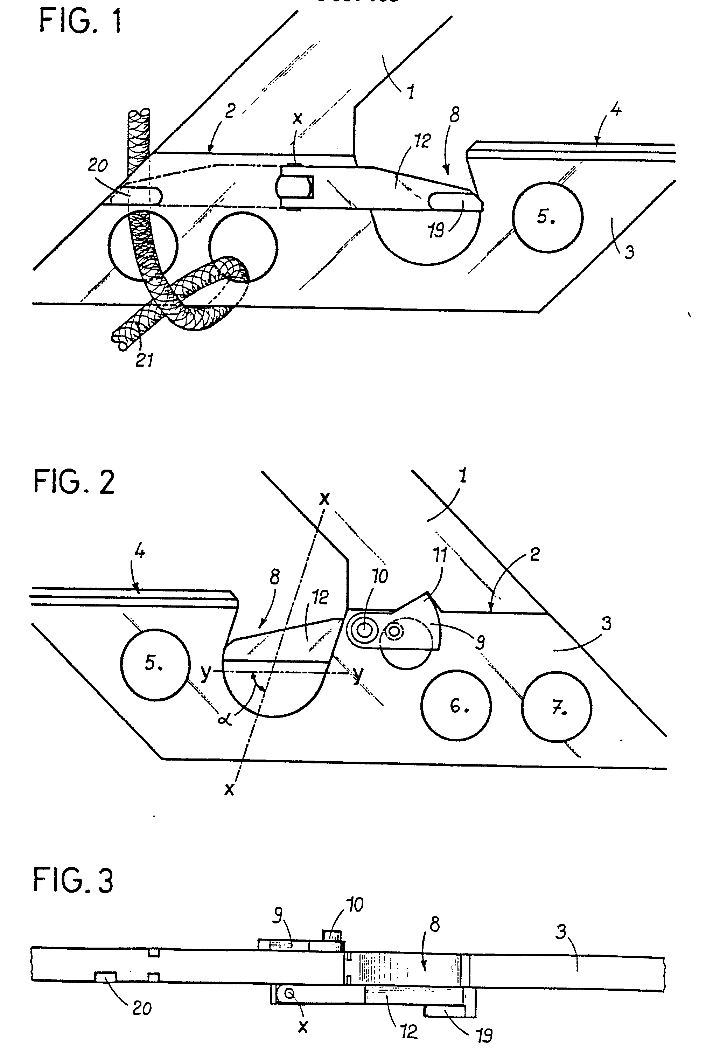

Lorsque le levier de commande 12 est dans sa position illustrée aux figures 1 et 2, l'usager peut introduire un organe d'accrochage dans l'entaille 8, ce qui provoque un déplacement du levier 12 et donc un pivotement du pivot 13 contre l'action de torsion du ressort 16 et le déverrouillage du verrou 9. Le coulisseau peut ainsi se déplacer dans la coulisse qui passe de l'autre côté de l'entaille 8 et donc de l'organe d'accrochage qui y est placé, de sorte qu'un lien qui serait fixé dans les perçages 6, 7 puisse ensuite être tiré au travers ou autour de cet organe d'accrochage.

Il faut noter que le déplacement angulaire du pivot 13 s'effectue contre l'action du ressort 16 et que le déplacement axial de ce pivot provoqué lors du basculement du levier 12 autour de son axe X s'effectue également contre l'action du ressort 16.

Il faut noter qu'une corde ou lien 21 peut être fixé sans nœud au coulisseau à l'aide des perçages 6, 7 comme illustré à la figure 1.

Suivant la forme et la dimension du coulisseau 3 et de son entaille 8, on peut à l'aide de ce dispositif faire passer le lien 21 dans un anneau ou autour d'une branche ou tout autre organe d'accrochage.

La forme et l'orientation de l'entaille 8 du coulisseau 3 peuvent également être modifiées en fonction de la nature du lien et de l'organe d'accrochage pour faciliter l'opération de passage du lien.

Le support 1 peut être simplement emmanché sur l'extrémité d'un manche mais peut également être fixé sur un bras articulé dont les déplacements sont télécommandés.

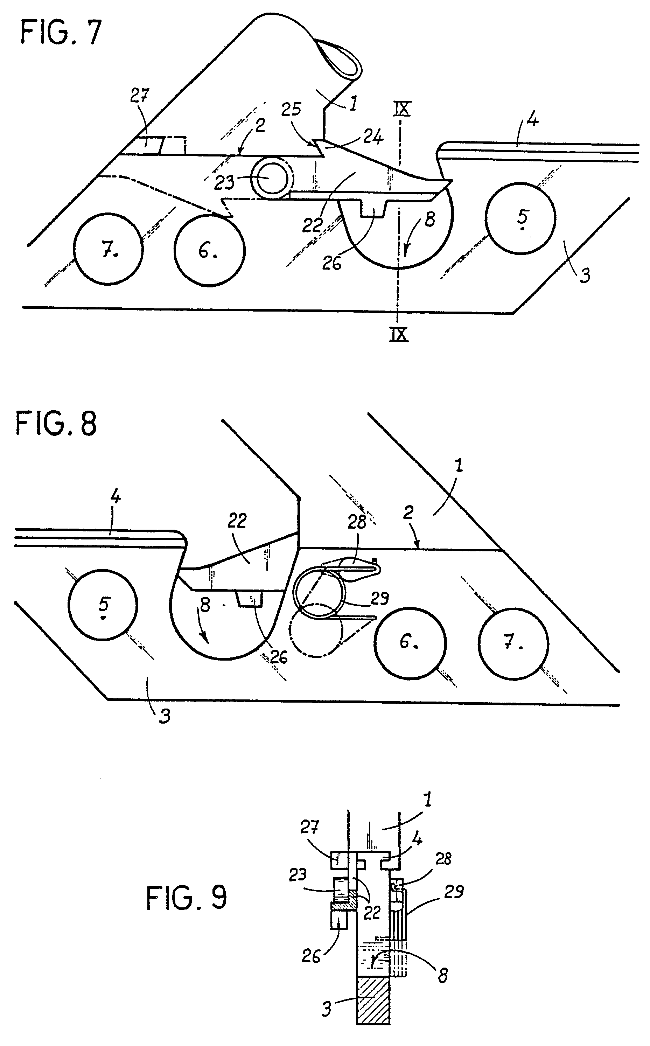

Les figures 7 à 9 illustrent une seconde forme d'exécution du mécanisme de verrouillage du coulisseau 3 sur la coulisse 2.

Le coulisseau 3 est monté déplaçable sur la coulisse 2 du support par une glissière 4 comme dans la première forme d'exécution. Le coulisseau 3 comporte également une entaille 8 destinée à recevoir un organe d'accrochage. L'axe de cette entaille est inclinée en direction du support 1 (figure 7), pour faciliter le dégagement de l'organe d'accrochage hors de cette entaille après le déplacement de la coulisse.

Le mécanisme de verrouillage du coulisseau 3 sur la coulisse 2 comporte un levier 22 solidaire d'un axe 23 traversant le coulisseau 3. Ce levier, s'étend en position de verrouillage temporaire (figure 7) en travers de l'entaille 8 et comporte un bec 24 constituant un verrou qui dans cette position est engagé dans une encoche 25 de forme correspondante pratiquée dans la coulisse 2.

Sur sa face dorsale, le levier 22 comporte une butée 26 coopérant, en position de verrouillage permanent avec un ergot 27 de la coulisse 2.

L'axe 23 est muni à son extrémité émergeant de l'autre côté du coulisseau 3 d'un excentrique 28. Un ressort 29 à trois ou quatre spires est fixée par l'un de ses extrémités à l'extrémité de l'excentrique 28 et par son autre extrémité au coulisseau 3.

Ce ressort 29 permet de maintenir le levier 22 soit dans sa position illustrée à la figure 8, pour le verrouillage temporaire, soit dans sa position illustrée en pointillé à la figure 7 pour le verrouillage permanent du coulisseau 3 sur le support 1.

En position de verrouillage temporaire, l'introduction d'un organe d'accrochage dans l'entaille 8 déplace le levier 22 et déverrouille donc le coulisseau 3 du support 1. Le support peut glisser jusqu'à ce que la coulisse 2 se trouve entièrement de l'autre côté de l'entaille 8, puis l'usager peut par une traction faire passer le lien qui est fixé au coulisseau à l'aide des perçages 6, 7 à travers l'organe d'accrochage.

Par contre, lorsque le levier 22 est dans son autre position stable sa butée 26 étant alors engagée contre l'ergot 27 du support, tout déplacement relatif entre le coulisseau 3 et le support 1 est interdit.

## Revendications

1. Dispositif permettant le passage à distance d'un lien (21) dans ou autour d'un organe d'accrochage comportant ; un support (1) dont l'extrémité porte une coulisse (2) ; un coulisseau (3), présentant une longueur supérieure au double de celle de la coulisse (2), coulissant dans cette coulisse (2) ; des moyens de fixation (6, 7) du lien (21) ainsi qu'une entaille (8), pratiquée dans le coulisseau (3), et débouchant sur la tranche de ce coulisseau (3) dirigée vers le support (1), caractérisé par le fait que cette entaille (8) est inclinée, en position initiale de service, vers l'extrémité du support (1) portant la coulisse (2).

2. Dispositif selon la revendication 1 caractérisé par le fait que les moyens de fixation (6, 7) du lien (21) au coulisseau (3) sont constitués par deux perçages pratiqués dans ce coulisseau (3) à proximité d'une de ses extrémités.

3. Dispositif selon l'une des revendications précédentes, caractérisé par le fait qu'il comporte un mécanisme de verrouillage du coulisseau (3) par rapport à la coulisse (2) présentant un verrou (9, 24) monté sur le coulisseau (3) et muni d'un bec (11) coopérant avec un logement du support (1).

4. Dispositif selon la revendication 3, caractérisé par le fait que ce mécanisme comporte encore un levier de commande (12) relié à un pivot (13) tourillonné dans le coulisseau (3), ce pivot (13) comportant une fente (17) coopérant avec un téton (18) solidaire du verrou (9).

5. Dispositif selon la revendication 4, caractérisé par le fait que le levier de commande (12) est articulé sur le pivot (13) suivant un axe perpendiculaire à celui dudit pivot (13), un ressort (16) étant prévu entre le pivot (13) et le coulisseau (3) pour maintenir le pivot (13) dans une position axiale et angulaire désirée par rapport au coulisseau (3).

6. Dispositif selon la revendication 5, caractérisé par le fait que l'extrémité libre du levier de commande (12) comporte un ergot (19) destiné à coopérer avec un logement (20) du coulisseau (3) pour interdire tout déplacement angulaire du pivot (13).

7. Dispositif selon la revendication 3 à 6, caractérisé par le fait que la longueur du coulisseau (3) est au moins égale au double de celle de la coulisse (2) augmentée de la largeur de l'entaille (8).

8. Dispositif selon la revendication 3, caractérisé par le fait que le verrou (24) est solidaire d'un levier de commande (22) fixé sur un axe (23) pivoté dans le coulisseau (3) ; cet axe (23) portant un excentrique (28) dont l'extrémité est reliée par un ressort (29) de quelques spires au coulisseau (3).

9. Dispositif selon la revendication 8, caractérisé par le fait que la face dorsale du levier (22) comporte une butée (26) destinée à coopérer avec un ergot (27) du support (1) pour le verrouillage permanent du coulisseau (3) sur le support (1).

**Claims**

1. Device for remotely passing a cord (21) in or around an anchoring member comprising ; a support (1) on the end of which a slide (2) is fast ; a sliding block (3), having a length greater than twice the one of the slide (2) ; fixing means (6, 7) of the cord (21) as well as a notch (8), provided in the sliding block (3), and opening on the edge of this sliding block (3) directed toward the support (1), characterized by the fact that this notch (8) is inclined, in initial service position, towards the end of the support (1) carrying the slide (2).

2. Device according to claim 1, characterized by the fact that the fixing means (6, 7) of the cord (21) to the sliding block (3) are formed of two holes provided in said sliding block (3) near one of its ends.

3. Device according to one of the preceeding claims, characterized by the fact that it comprises a locking mechanism of the sliding block (3) with respect to the slide (2) comprising a lock (9, 24) mounted on the sliding block (3) and provided with a beak (11) cooperating with a housing of the support (1).

4. Device according to claim 3, characterized by the fact that this mechanism comprises further a control lever (12) connected to a pivot (13) journaled in the sliding block (3), this pivot (13) comprising a slot (17) cooperating with an pin (18) fast with the lock (9).

5. Device according to claim 4, characterized by the fact that the control lever (12) is hinged on the pivot (13) along an axis perpendicular to the one of the pivot (13), a spring (16) being provided between the pivot (13) and the sliding block (3) to maintain the pivot (13) in a desired axial and angular position with respect to the sliding block (3).

6. Device according to claim 5, characterized by the fact that the free end of the control lever (12) comprises a lug (19) intended to cooperate with a housing (20) of the sliding block (3) to hinder any angular displacement of the pivot (3).

7. Device according to one of claims 3 to 6, characterized by the fact that the length of the sliding block (3) is at least equal to twice the one of the slide (2) increased by the width of the notch (8).

8. Device according to claim 3, characterized by the fact that the lock (24) is fast with a control lever (22) fixed on an axis (23) pivoted in the sliding block (3) ; this axis (23) carrying an excenter (28) the end of which is connected through a spring (29) of a few turns to the sliding block (3).

9. Device according to claim 8, characterized by the fact that the back face of the lever (22) comprises an abutment (26) intended to cooperate with a lug (27) of the support (1) to lock permanently the sliding block (3) on the support (1).

**Patentansprüche**

1. Vorrichtung zum Durchführen auf Abstand eines Bandes (21) in oder um eine Aufhängvorrichtung mit einem Träger (1), dessen Ende eine Gleitschiene (2) trägt, einem Gleitstück (3), dessen Länge größer als das Doppelte derjenigen der Gleitschiene (2) ist und das in der Gleitschiene (2) gleitet, Vorrichtungen (6, 7) zum Befestigen des Bandes (21), sowie eine Einkerbung (8), die in dem Gleitstück (3) angebracht ist und die sich auf dem Teil des Gleitstücks (3) öffnet, der zum Träger (1) hinzeigt, dadurch gekennzeichnet, daß diese Einkerbung (8) in ihrer anfänglichen Betriebsstellung zum Ende des Trägers (1), das die Gleitschiene (2) trägt, hin geneigt ist.

2. Vorrichtung nach Anspruch 1, dadurch gekennzeichnet, daß die Vorrichtungen (6, 7) zum Befestigen des Bandes (21) am Gleitstück (3) durch zwei Bohrungen gebildet werden, die im Gleitstück (3) in der Nähe eines seiner beiden Enden angebracht sind.

3. Vorrichtung nach einem der vorigen Ansprüche, dadurch gekennzeichnet, daß sie einen Mechanismus zur Verriegelung des Gleitstücks (3) bezüglich der Gleitschiene (2) enthält, der einen Riegel (9, 24) aufweist, der auf dem Gleitstück (3) angebracht und mit einer Nase (11) versehen ist, die mit einer Aussparung des Trägers (1) zusammenwirkt.

4. Vorrichtung nach Anspruch 3, dadurch gekennzeichnet, daß der Mechanismus weiterhin einen Bedienungshebel (12) enthält, der mit einem im Gleitstück (3) drehbar gelagerten Bolzen (13) verbunden ist, wobei der Bolzen (13) eine Aussparung (17) enthält, die mit einem mit dem Riegel (9) fest verbundenen Ansatzstück (18) zusammenwirkt.

5. Vorrichtung nach Anspruch 4, dadurch gekennzeichnet, daß der Bedienungshebel (12) einer Achse nach, die senkrecht zu derjenigen des Bolzens (13) steht, schwenkbar auf dem Bolzen (13) verbunden ist, wobei eine Feder (16) zwischen dem Gleitstück (3) und dem Bolzen (13) vorgesehen ist, um den Bolzen (13) in einer gewünschten Axial- und Winkelposition zum Gleitstück (3) zu halten.

6. Vorrichtung nach Anspruch 5, dadurch gekennzeichnet, daß das freie Ende des Bedienungshebels (12) einen Vorsprung (19) aufweist, der mit einer Ausbuchtung (20) des Gleitstücks (3) zusammenwirkt, um jede winklige Lageveränderung des Bolzens (13) zu verhindern.

7. Vorrichtung nach einem der Ansprüche 3 bis 6, dadurch gekennzeichnet, daß die Länge des Gleitstücks (3) mindestens gleich der doppelten Länge der Gleitschiene (2) plus der Breite der Einkerbung (8) ist.

8. Vorrichtung nach Anspruch 3, dadurch gekennzeichnet, daß der Riegel (24) mit einem Bedienungshebel (22) fest verbunden ist, der auf einer im Gleitstück (3) drehbar gelagerten Achse (23) befestigt ist, wobei diese Achse (23) einen Exzenter (28) trägt, dessen Enden über eine Feder (29) mit einigen Windungen mit dem Gleitstück (3) verbunden ist.

9. Vorrichtung nach Anspruch 8, dadurch gekennzeichnet, daß die Rückseite des Hebels (22) einen Anschlag (26) enthält, der mit einem Vorsprung (27) des Trägers (1) zusammenwirkt, um das Gleitstück (3) auf dem Träger (1) beständig zu verriegeln.

0 081 108

FIG. 1

FIG. 2

FIG. 3

FIG. 4

FIG. 5

FIG. 6

FIG. 7

FIG. 8

FIG. 9